## Europäisches Patentamt

## European Patent Office

## Office européen des brevets

(19)

(11) Veröffentlichungsnummer: **0 126 295**
**B1**

(12) # EUROPÄISCHE PATENTSCHRIFT

(45) Veröffentlichungstag der Patentschrifft:
07.02.90

(21) Anmeldenummer: 84104302.9

(22) Anmeldetag: 16.04.84

(51) Int. Cl. ⁵: **H 04 N 7/13**, H 03 M 7/38

(54) PCM-Übertragungssystem mit Datenreduzierung, insbesondere für Fernsehsignale.

(30) Priorität: 21.04.83 DE 3314384

(43) Veröffentlichungstag der Anmeldung:
28.11.84 Patentblatt 84/48

(45) Bekanntmachung des Hinweises auf die Patenterteilung:
07.02.90 Patentblatt 90/06

(84) Bennante Vertragsstaaten:
AT BE CH DE FR GB IT LI NL SE

(56) Entgegenhaltungen:
DE-A-2 405 534
DE-A-2 740 945
DE-B-2 547 120
GB-A-2 003 001

"Review of the Electrical Communication Laboratories", Vol. 27, Nr. 11-12, Nov.-Dez. 1979, St. 1095-1112.

(73) Patentinhaber: Siemens Aktiengesellschaft
Wittelsbacherplatz 2
D-8000 München 2 (DE)

(72) Erfinder: Grallert, Hans-Joachim, Dr.-Ing.
Tannenfleckstrasse 30
D-8038 Gröbenzell (DE)

## Beschreibung

Die Erfindung bezieht sich auf ein Übertragungssystem, das zu übertragende PCM-Codewörter insbesondere von Fernsehsignalen reduziert, das sendeseitig einen DPCM-Codierer mit einem ersten Quantisierer zur Erzeugung von DPCM-Codewörtern und mit einem zweiten Quantisierer zur Erzeugung von DPCM-Codewörtern fester unterdurchschnittlicher Länge enthält, die eingangsseitig parallel geschaltet und ausgangsseitig über einen ersten sendeseitigen Umschalter mittels einer sendeseitigen Umschaltersteuerung wechselweise anschaltbar sind, das einen sendeseitigen Codeumsetzer zur Reduzierung der Anzahl der Bits pro Codewort enthält, von dem die sendeseitige Umschaltersteuerung betätigt wird, das einen sendeseitigen und einen empfangsseitigen Pufferspeicher mit Speicherplätzen für eine vorgegebene Anzahl von DPCM-Codewörtern durchschnittlicher länge enthält, das einen ersten empfangsseitigen Codeumsetzer zur Erhöhung der Anzahl von Bits pro Bildpunkt enthält, der eine empfangsseitige Umschaltersteuerung betätigt, und das einen dem empfangsseitigen Codeumsetzer nachgeschalteten DPCM-Decodierer mit einem zweiten empfangsseitigen Codeumsetzer zur Umsetzung der DPCM-Codewörter aus dem ersten Quantisierer in DPCM-Codewörter einer Einheitslänge und mit einem dritten empfangsseitigen Codeumsetzer zur Umsetzung der DPCM-Codewörter fester unterdurchschnittlicher Länge in DPCM-Codewörter einer Einheitslänge, die eingangsseitig parallel geschaltet und ausgangsseitig über einen empfangsseitigen Umschalter mittels der empfangsseitigen Umschaltersteuerung wechselweise einschaltbar sind, und mit einem, dem empfangsseitigen Umschalter nachgeschalteten DPCM-Teil-Dekodierer, der DPCM-Codewörter der Einheitslänge in PCM-Codewörter der ursprünglichen Länge umsetzt, enthält.

PCM ist die Abkürzung für Pulscodemodulation und DPCM ist die für Differenz-Pulscodemodulation. DPCM-Codierer und -Decodierer sind beispielsweise in der Zeitschrift "Funkschau", 1973, Heft 16, Seiten 591 bis 593, insbesondere Bild 6c beschrieben.

Ein Übertragungssystem der eingangs beschriebenen Art ist aus der Literaturstelle "Review of the Electrical Communication Laboratories", Vol. 27, Nr. 11 - 12, Nov.-Dez. 1979, Seiten 1095 bis 1112, insbesondere Fig. 12 bekannt. Bei diesem Übertragungssystem für Fernsehsignale dient der erste Quantisierer je nach Coderegel zur Erzeugung von vierstelligen oder achtstelligen DPCM-Codewörtern. Die sendeseitige Umschaltersteuerung zählt die in einem Meßzeitraum auftretenden achtstelligen DPCM-Codewörter und schaltet nach Erreichung einer gewissen Anzahl den anderen Quantisierer ein, der vierstellige DPCM-Codewörter erzeugt. Bei diesem System wird bei bevorstehendem Pufferüberlauf auf den Quantisierer mit gröberer Kennlinie umgeschaltet. Mit dem Umschaltpunkt beginnend treten in der restlichen Bildzeile grobe Quantisierungsfehler auf, was sich auf Flächen erstrecken kann.

Aufgabe der Erfindung ist es, ein Übertragungssystem anzugeben, bei dem die auf Quantisierungsfehlern beruhenden Bildfehler unauffälliger sind.

Ausgehend von einem Übertragungssystem der einleitend geschilderten Art wird diese Aufgabe erfindungsgemäß dadurch gelöst, daß der erste Quantisierer für eine Erzeugung von DPCM-Codewörtern variabler Länge ausgebildet ist, daß die sendeseitige Umschaltersteuerung derart ausgebildet ist, daß sie nach Bildung jedes DPCM-Codeworts prüft, ob für die noch ausstehenden DPCM-Codewörter, soweit sie eine durchschnittliche Länge aufweisen würden noch hinreichend viele Speicherplätze vorhanden sind und bei positivem Ergebnis den ersten Quantisierer und bei negativem Ergebnis den zweiten Quantisierer anschaltet, und daß die empfangsseitige Umschaltersteuerung derart ausgebildet ist, daß sie nach einer der senderseitigen entsprechenden Prüfung entweder den ersten Codeumsetzer oder den zweiten Codeumsetzer anschaltet.

Bei der Übertragung digitaler Fernsehsignale bezieht sich die Anzahl der Speicherplätze jeweils auf eine oder mehrere Bildzeilen.

Bei dem erfindungsgemäßen System wird in der Umgebung von Signalsprüngen (Bildflanken) auf den Quantisierer mit der gröberen Kennlinie umgeschaltet, weil nur dort überdurchschnittlich lange Codewörter auftreten. In der Umgebung von Kanten nimmt das Auge große Quantisierungsfehler nicht auf. Wenn im weiteren Verlauf der Zeile wieder genügend Speicherplatz zur Verfügung steht, wird mittels des Quantisierers für variable Wortlänge die Auflösung wieder erhöht. Quantisierungsfehler treten also vorwiegend in der Umgebung von Kanten und nicht grundsätzlich in der rechten Seite des Bildes auf.

Vorteilhaft ist es, wenn ein DPCM-Codierer und ein DPCM-Decodierer zur Umsetzung parallel anliegender Codewörter vorgesehen sind, wenn diesem DPCM-Codierer ein Parallel-Seriellumsetzer nachgeschaltet ist und wenn diesem DPCM-Decodierer ein Seriell-Parallelumsetzer vorgeschaltet ist.

Vorteilhaft ist es außerdem, wenn zwischen dem DPCM-Codierer und dem Parallel-Seriellumsetzer zwei eingangsseitig parallelgeschaltete sendeseitige Codeumsetzer zur Reduzierung der Anzahl paralleler Leitungen vorgesehen sind und wenn die Ausgänge der sendeseitigen Codeumsetzer über einen zweiten sendeseitigen, von der sendeseitigen Umsetzersteuerung gesteuerten Umschalter mit dem Eingang des Parallel-Seriellumsetzer verbunden sind.

Anhand von Ausführungsbeispielen wird die Erfindung nachstehend näher erläutert.

Fig. 1  zeigt ein erfindungsgemäßes Übertragungssystem,

Fig. 2  zeigt eine Variante des erfindungsgemäßen Übertragungssystems für eine Verarbeitung parallel anstehender Codewörter.

Fig. 3 zeigt detailliert einen sendeseitigen Codeumsetzer,

Fig. 4 zeigt detailliert einen ersten empfangsseitigen Codeumsetzer und

Fig. 5 zeigt detailliert eine sende- und empfangsseitige Umschaltersteuerung.

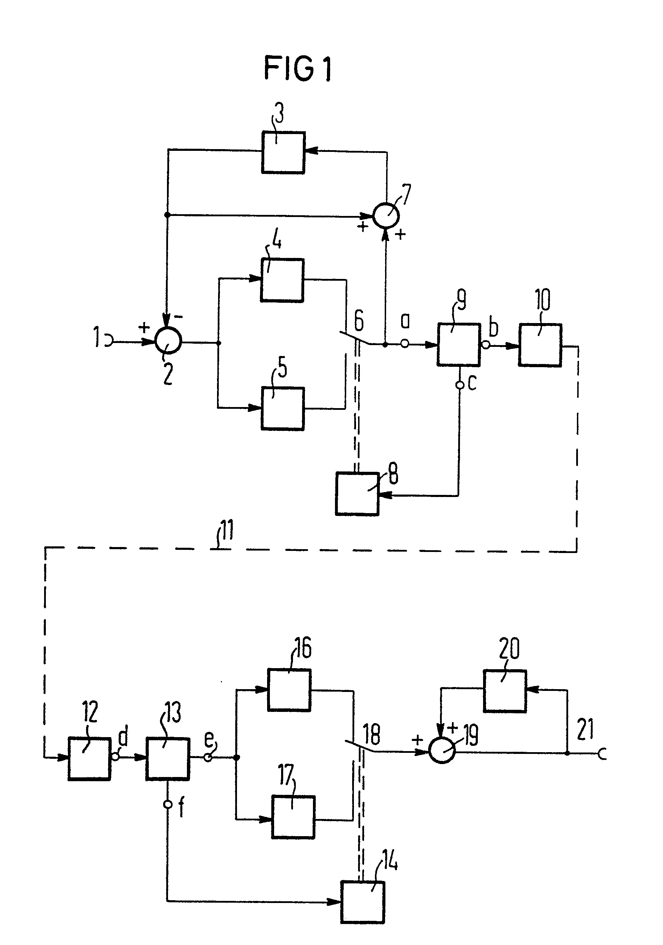

Figur 1 zeigt das erfindungsgemäße Übertragungssystem, dessen Sendeseite die Elemente 1 - 10 und dessen Empfangsseite die Elemente 12 - 21 enthält. Die Übertragungsstrecke ist mit 11 bezeichnet.

Der Sendeteil enthält einen Eingang 1, einen Subtrahierer 2, einen Prädiktor 3, einen ersten Quantisierer 4 zur Erzeugung von DPCM-Codewörtern variabler Länge, einen zweiten Quantisierer 5 zur Erzeugung von DPCM-Codewörtern fester unterdurchschnittlicher Länge, einen Umschalter 6, einen Addierer 7, eine Umschaltersteuerung 8, einen sendeseitigen Codeumsetzer 9 und einen Pufferspeicher 10.

Die Empfangsseite enthält einen Pufferspeicher 12, einen Codeumsetzer 13, eine Umschaltersteuerung 14, einen Umschalter 18, einen Codeumsetzer 16 für DPCM-Codewörter variabler Länge, einen Codeumsetzer 17 für DPCM-Codewörter fester unterdurchschnittlicher Länge, einen Addierer 19, einen Prädiktor 20 und einen Ausgang 21.

An den Eingang 1 wird ein digitales Fernsehsignal angelegt. Dabei wird mit der Umsetzung des ersten PCM-Codeworts einer Bildzeile begonnen. Der aus den Elementen 2, 3, 4 und 7 bestehende DPCM-Codierer setzt dieses PCM-Codewort in ein DPCM-Codewort um, dessen Länge sich nach den Erfordernissen der DPCM-Schleife und dessen Inhalt sich nach der Codevorschrift richtet. Im Codeumsetzer 9 wird dann die Anzahl der Bits pro Bildpunkt auf den tatsächlich benötigten Wert reduziert. Es wird außerdem geprüft, ob nach dem Einlesen dieses DPCM-Codeworts noch hinreichend viele Speicherplätze für die restlichen DPCM-Codewörter der Bildzeile vorhanden sind. Ist dies der Fall, so wird die Stellung des Umschalters 6 nicht verändert und das nächste PCM-Codewort im selben DPCM-Codierer umgesetzt. Tritt einmal der Fall ein, daß die vorgeschriebene Mindestzahl von Speicherplätzen für die in der Bildzeile noch zu erwartenden DPCM-Codewörter erreicht ist, erhält die Umschaltersteuerung 8 ein Signal und schaltet ihrerseits den Umschalter 6 um. Das nächste am Eingang 1 anliegende PCM-Codewort wird nun dem aus den Elementen 2, 3, 5 und 7 bestehenden DPCM-Codierer zugeführt, der es in ein kurzes DPCM-Codewort konstanter Länge umsetzt. Stellt nach einer oder mehreren Umsetzungen der Umcodierer 9 fest, daß wieder eine genügende Reserve von Speicherplätzen für die noch zu erwartenden DPCM-Codewörter der Bildzeile bereitstehen, dann veranlaßt er über die Umschaltersteuerung 8 eine erneute Umschaltung des Umschalters 6. Am Ende der Bildzeile nicht besetzte Speicherplätze werden mit willkürlichen Daten, beispielsweise Nullen aufgefüllt.

Die nach Übertragung über die Leitung 11 vom Pufferspeicher 12 empfangenen DPCM-Codewörter werden dem Umcodierer 13 zugeführt und in gleicher Weise ausgewertet, wie dies auf der Sendeseite erfolgte. Dies bedeutet, daß die Umschaltersteuerung 14 den Umschalter 18 - um die Übertragungszeit der Strecke 11 verzögert - im selben Rhythmus wie den Umschalter 6 steuert. Der Codeumsetzer 16 setzt die DPCM-Codewörter variabler Länge, und der Codeumsetzer 17 die DPCM-Codewörter fester unterdurchschnittlicher Länge in DPCM-Codewörter einer Einheitslänge um. Der eigentliche DPCM-Decodierer mit dem Addierer 19 und dem Prädiktor 20 setzt schließlich die DPCM-Codewörter der Einheitslänge in PCM-Codewörter um, die am Ausgang 21 entnommen werden können. Diese PCM-Codewörter haben zwar die gleiche Länge wie die ursprünglichen PCM-Codewörter am Eingang 1, jedoch sind die bei der Quantisierung aufgetretenen Fehler nicht mehr rückgängig zu machen.

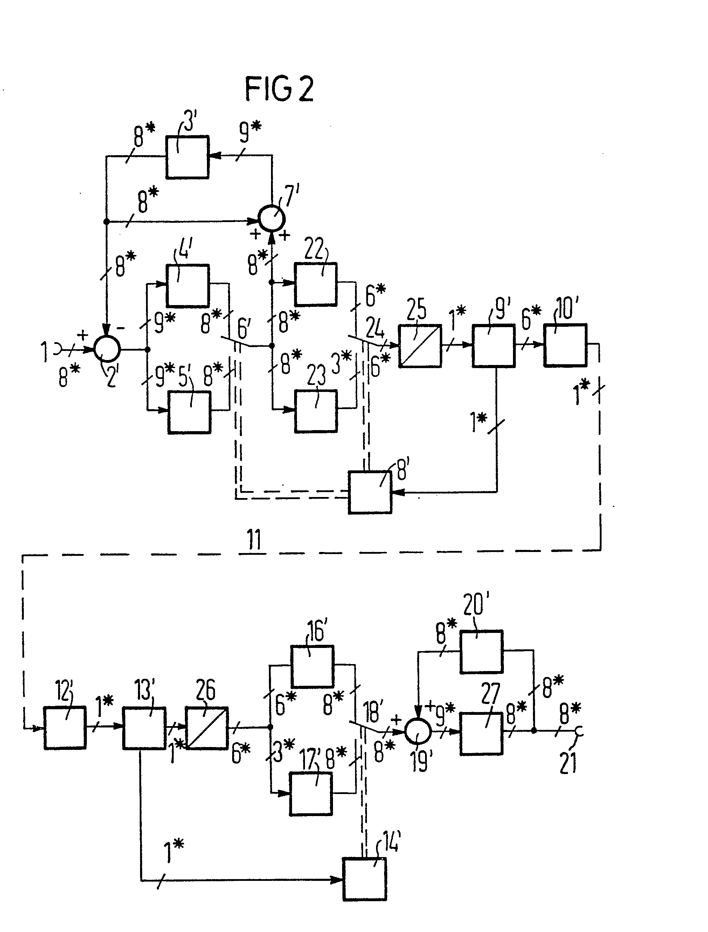

Figur 2 zeigt eine Variante des erfindungsgemäßen Übertragungssystems, bei dem die PCM-Codewörter eingangsseitig parallel angeboten und ausgangsseitig wieder parallel entnommen werden.

Das Übertragungssystem enthält die bereits in Figur 1 gezeigten Elemente. Ihre Bezugszeichen sind mit einem Apostroph versehen. Zusätzlich enthält das Übertragungssystem Codeumsetzer 22 und 23, einen Umschalter 24, einen Parallel-Seriellumsetzer 25, einen Seriell-Parallelumsetzer 26 und einen Begrenzer 27. Mit einem Stern versehene Ziffern zeigen die Anzahl paralleler Leitungen an.

Die Wirkungsweise dieses Übertragungssystems entspricht im wesentlichen dem nach der Figur 1. In den DPCM-Codierern müssen jeweils mindestens acht parallele Leitungen vorgesehen werden, damit die einzelnen Elemente zusammenarbeiten können, auch wenn nicht alle diese Verbindungsleitung mit Signalen belegt sind.

Eine Reduzierung dieser Anzahl erfolgt erst mittels der Codeumsetzer 22 und 23. Die verbleibenden maximal sechsstelligen DPCM-Codewörter werden im Parallel-Seriellumsetzer 25 umgesetzt und über den Pufferspeicher 10', die Leitung 11' und den Pufferspeicher 13', dem Seriell-Parallelumsetzer 26' zugeführt, an den sich der DPCM-Decodierer 14', 16', 17', 18', 19', 20' und 27' anschließt, in dem die Rückumsetzung erfolgt.

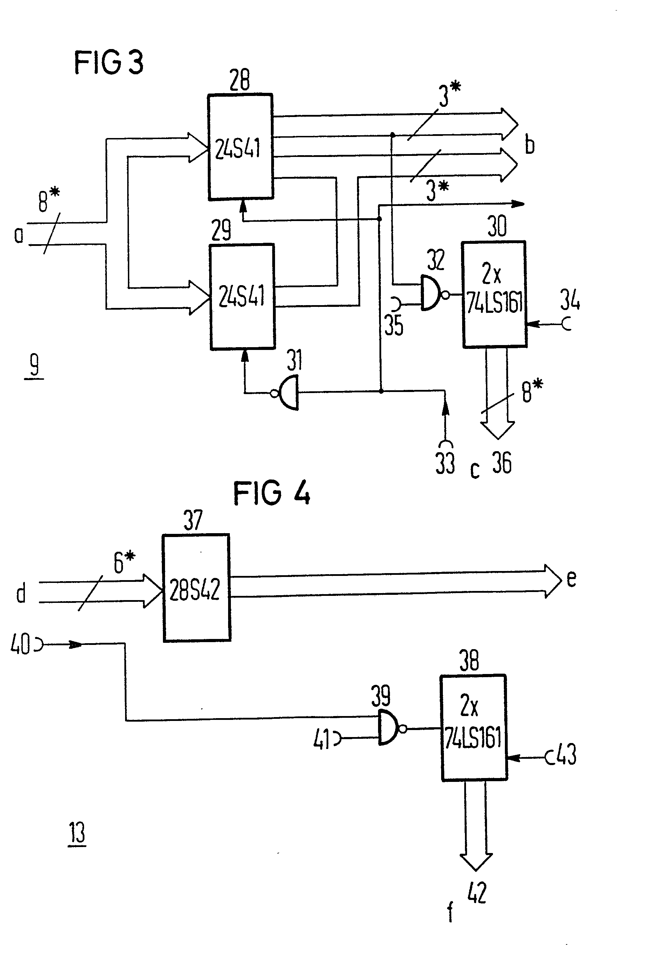

Figur 3 zeigt den Codeumsetzer 9 mit seinem Eingang a, mit seinem Ausgang b und seinem Steuerausgang c gemäß Figur 1 detailliert. Die Anordnung enthält programmierbare Festwertspeicher (PROM) 28 und 29 des Typs 24S41, einen Zähler 30, bestehend aus zwei integrierten Schaltungen des Typs 74LS161, einen Inverter 31 und ein NAND-Gatter 32.

Am Eingang a liegen die aus der DPCM-Schleife 1 bis 7 in Figur 1 kommenden Codewörter an, die hier 8-bit-Codewörter sein sollen. Diese werden, wenn sie aus dem Quantisierer 4 stammen, im programmierbaren Festwertspeicher 28 in ein 3- oder 6-bit-Codewort, oder wenn sie aus dem Quantisierer 5 stammen, in dem programmierbaren Festwertspeicher 29 in ein 3-bit-Codewort umgesetzt. Die Entscheidung, welcher programmierbare Festwertspeicher zur Umsetzung herangezogen wird, trifft ein am Eingang 33 anliegendes Signal, welches parallel zum Ausgang c in den Codeumsetzer 9 gelangt.

Der Ausgang b besteht aus sechs Datenleitungen und einer mit dem Eingang 33 in Verbindung stehenden Signalisierungsleitung, die dem Pufferspeicher 10 mitteilt, ob das auf den Datenleitungen anliegende Codewort im programmierbaren Festspeicher 28 oder im programmierbaren Festwertspeicher 29 umgesetzt wurde.

Der Zähler 30 wird zu Beginn einer Bildzeile durch einen am Eingang 34 anliegenden Zeilenimpuls zurückgesetzt. Mit dem am Eingang 35 anliegenden Worttakt und dem NAND-Gatter 32 zählt der Zähler 30 die Anzahl der 6-bit-Codewörter. Der Zählerausgang 36 gibt stets die Anzahl der in der aktuellen Zeile bereits codierten 6-bit-Codewörter an.

Figur 4 zeigt detailliert den Codeumsetzer 13 gemäß Figur 1 mit dem Eingang d, dem Ausgang e und dem Steuerausgang f. Die Anordnung enthält einen programmierbaren Festwertspeicher (PROM) 37 des Typs 28S42, einen Zähler 38, bestehend aus zwei integrierten Schaltungen des Typs 74LS161, und ein NAND-Gatter 39.

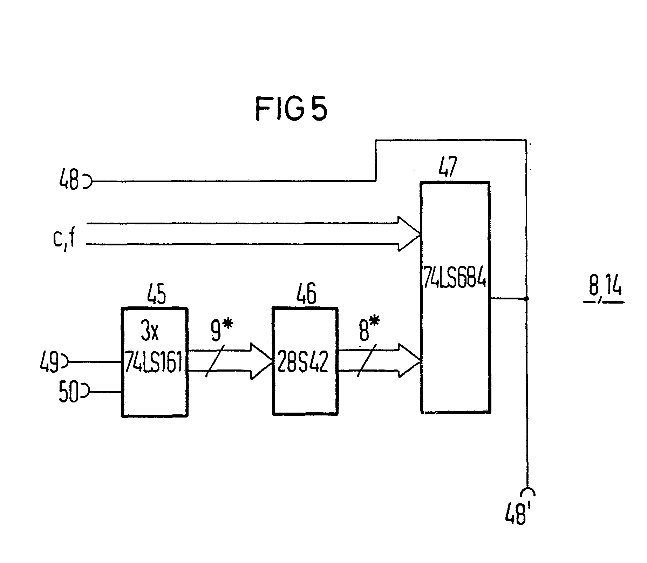

Am Eingang d liegen die aus dem Pufferspeicher 12 kommenden 3- oder 6-bit-Codewörter an. Zusätzlich liegt am Eingang 40 ein Signal an, welches angibt, ob auf den sechs parallelen Leitungen des Eingangs d ein 3- oder ein 6-bit-Codewort anliegt. Der programmierbare Festwertspeicher 37 decodiert das 6-bit-Codewort in die Nummer der zugehörigen Quantisierungsstufe, die dann am Ausgang e in die nachfolgende Schaltung abgegeben wird. Das Signal am Eingang 40 öffnet das NAND-Gatter 39, so daß der Zähler 38 mit dem Bildpunkttakt am Eingang 41 weiterzählt. Am Ausgang 42 steht die Anzahl der in der aktuellen Bildzeile bereits empfangenen 6-bit-Codewörter an. Der Zähler 38 wird zu Beginn jeder Zeile mit einem Zeilenimpuls am Eingang 43 zurückgesetzt. Der Zählerstand des Zählers 38 wird in einer Anordnung entsprechend Figur 5 verarbeitet.

Figur 5 zeigt eine Umschaltersteuerung 8 bzw. 14 mit einem Eingang c bzw. f. Die Anordnung enthält einen Zähler 45, realisiert aus drei integrierten Schaltungen 74LS161, einen programmierbaren Festwertspeicher (PROM) 46 des Typs 28S42 und einen Vergleicher 47 in Form einer integrierten Schaltung des Typs 74LS684.

Der Zähler 45 zählt die Anzahl der in einer Bildzeile bereits codierten Codewörter. Er wird zu Beginn jeder Bildzeile durch einen am Eingang 50 anliegenden Zeilenimpuls zurückgesetzt und zählt mit Hilfe des am Eingang 49 anliegenden Worttaktes. Der Ausgang des Zählers 45 ist mit dem Eingang des programmierbaren Festwertspeichers 46 verbunden, dessen Ausgang anzeigt, wieviele 6-bit-Codewörter bis zum aktuellen Bildpunkt in der Bildzeile zugelassen sind. Der Vergleicher 47 vergleicht die Anzahl der zugelassenen 6-bit-Codewörter mit der Anzahl der am Eingang c bzw. f tatsächlich aufgetretenen Codewörter. Ist deren Anzahl größer als die am Ausgang des programmierbaren Festwertspeichers 46, so gibt der Vergleicher ein Signal an die Ausgänge 48 und 48' ab. Dieses Signal bewirkt, daß der Umschalter 6 in Figur 1 auf den Quantisierer 5 umschaltet. Gleichzeitig teilt es dem Codeumsetzer 9 in Figur 1 mit, daß das nächste Codewort mit drei Bits zu codieren ist. Bildet die Anordnung die Umschaltersteuerung 14 nach Figur 1, dann bewirkt das Signal an den Ausgängen 48, 48' die Umschaltung des Umschalters 18.

## Patentansprüche

1. Übertragungssystem, das zu übertragende PCM-Codewörter insbesondere von Fernsehsignalen reduziert, das sendeseitig einen DPCM-Codierer (2 - 7) mit einem ersten Quantisierer (4) zur Erzeugung von DPCM-Codewörtern und mit einem zweiten Quantisierer (5) zur Erzeugung von DPCM-Codewörtern fester unterdurchschnittlicher Länge enthält, die eingangsseitig parallel geschaltet und ausgangsseitig über einen ersten sendeseitigen Umschalter (6) mittels einer sendeseitigen Umschaltersteuerung (8) wechselweise anschaltbar sind, das einen sendeseitigen Codeumsetzer (9) zur Reduzierung der Anzahl der Bits pro Codewort enthält, von dem die sendeseitige Umschaltersteuerung (8) betätigt wird, das einen sendeseitigen (10) und einen empfangsseitigen (12) Pufferspeicher mit Speicherplätzen für eine vorgegebene Anzahl von DPCM-Codewörtern durchschnittlicher länge enthält, das einen ersten empfangsseitigen Codeumsetzer (13) zur Erhöhung der Anzahl von Bits pro Bildpunkt enthält, der eine empfangsseitige Umschaltersteuerung (14) betätigt, und das einen dem empfangsseitigen Codeumsetzer (13) nachgeschalteten DPCM-Codierer (16 - 20) mit einem zweiten empfangsseitigen Codeumsetzer (16) zur Umsetzung der DPCM-Codewörter aus dem ersten Quantisierer (4) in DPCM-Codewörter einer Einheitslänge und mit einem dritten empfangsseitigen Codeumsetzer (17) zur Umsetzung der DPCM-Codewörter fester unterdurchschnittlicher Länge in DPCM-Codewörter einer Einheitslänge, die eingangsseitig parallelgeschaltet und ausgangsseitig über einen empfangsseitigen Umschalter (18) mittels der empfangsseitigen Umschaltersteuerung (14) wechselweise anschaltbar sind, und ferner mit einem, dem empfangsseitigen Umschalter (18) nachgeschalteten DPCM-Teil-Decodierer (19, 20), der DPCM-Codewörter der Einheitslänge in PCM-Codewörter der ursprünglichen Länge umsetzt, enthält *dadurch gekennzeichnet*, daß der erste Quantisierer (4) für eine Erzeugung von DPCM-Codewörtern variabler Länge ausgebildet ist, daß die sendeseitige Umschaltersteuerung (8) derart ausgebildet ist, daß sie nach Bildung jedes DPCM-Codeworts prüft, ob für die noch ausstehenden DPCM-Codewörter, soweit sie eine durchschnittliche Länge aufweisen würden, noch hinreichend viele Speicherplätze vorhanden sind, und bei positivem Ergebnis den ersten Quantisierer (4) und bei negativem Ergebnis den zweiten Quantisierer (5) anschaltet, und daß die empfangsseitige Umschaltersteuerung (14) derart ausgebildet ist, daß sie nach einer der sendeseitigen entsprechenden Prüfung entweder den ersten Codeumsetzer (16) oder den zweiten Codeumsetzer (17) anschaltet.

2. Übertragungssystem nach Anspruch 1, *dadurch gekennzeichnet*, daß ein DPCM-Codierer (2' - 7') und ein DPCM-Decodierer (16' - 20') zur Umsetzung parallel anliegender Codewörter vorgesehen sind, daß diesem DPCM-Codierer (2' - 7') ein Parallel-Seriellumsetzer (25) nachgeschaltet ist und daß diesem DPCM-Decodierer (16' - 20') ein Seriell-Parallelumsetzer (26) vorgeschaltet ist.

3. Übertragungssystem nach Anspruch 1, *dadurch gekennzeichnet*, daß zwischen dem DPCM-Codierer (2' - 7') und dem Parallel-Seriellumsetzer (25) zwei eingangsseitig parallelgeschaltete sendeseitige Codeumsetzer (22, 23) zur Reduzierung der Anzahl paralleler Leitungen vorgesehen sind und daß die Ausgänge der sendeseitigen Codeumsetzer (22, 23) über einen zweiten sendeseitigen, von der sendeseitigen Umschaltersteuerung (8') gesteuerten Umschalter (24) mit dem Eingang des Parallel-Seriellumsetzer (25) verbunden sind.

## Claims

1. Transmission system which reduces PCM code words, particularly of television signals, which contains at the transmitting end a DPCM coder (2 - 7) comprising a first quantizer (4) for generating DPCM code words and comprising a second quantizer (5) for generating DPCM code words of fixed below-average length which are connected in parallel at the input side and can be alternately connected at the output side via a first transmitting-end changeover switch (6) by means of a transmitting-end changeover switch control (8), which contains a transmitting-end code converter (9) for reducing the number of bits per code word, by which the transmitting-end changeover switch control (8) is operated, which contains a transmitting-end (10) and a receiving-end (12) buffer store with storage spaces for a pre-determined number of average-length DPCM code words, which contains a first receiving-end code converter (13) for increasing the number of bits per picture element, which operates a receiving-end changeover switch control (14), and which contains a DPCM coder (16 - 20), which follows the receiving-end code converter (13), comprising a second receiving-end code converter (16) for converting the DPCM code words from the first quantizer (4) into DPCM code words of a unit length and comprising a third receiving-end code converter (17) for converting the DPCM code words of fixed below average length into DPCM code words of a unit length which are connected in parallel on the input side and can be alternately connected by means of the receiving-end changeover switch control (14) via a receiving-end changeover switch (18) on the output side, and furthermore comprising a DPCM part decoder (19, 20) which follows the receiving-end changeover switch (18) and which converts unit-length DPCM code words into PCM code words of the original length, characterized in that the first quantizer (4) is constructed for generating variable-length DPCM code words, that the transmitting-end changeover switch control (8) is constructed in such a manner that it checks, after each DPCM code word has been formed, whether a sufficient number of storage spaces still exist for the DPCM code words still outstanding, inasmuch as they would have an average length, and connects the first quantizer (4) with a positive result and connects the second quantizer (5) with a negative result, and that the receiving-end changeover switch control (14) is constructed in such a manner that it either connects the first code converter (16) or the second code converter (17) after a check corresponding to the transmitting-end check.

2. Transmission system according to Claim 1, characterized in that a DPCM coder (2' - 7') and a DPCM decoder (16' - 20') are provided for converting code words which are present in parallel, that this DPCM coder (2' - 7') is followed by a parallel/serial converter (25) and that this DPCM decoder (16' - 20') is preceded by a serial/parallel converter (26).

3. Transmission system according to Claim 1, characterized in that two transmitting-end code converters (22, 23), which are connected in parallel on the input side, are provided between the DPCM coder (2' - 7') and the parallel/serial converter (25) for reducing the number of parallel lines and that the outputs of the transmitting-end code converters (22, 23) are connected to the input of the parallel/serial converter (25) via a second transmitting-end changeover switch (24) controlled by the transmitting-end changeover switch control (8').

## Revendications

1. Système de transmission qui réduit des mots de code MIC devant être transmis, notamment de signaux de télévision, et qui, côté émission, contient un décodeur MICD (2 - 7) comportant un premier quantifieur (4) servant à produire des mots de code MICD et un second quantifieur (5) servant à produire des mots de code MICD possédant une longueur fixe inférieure à la moyenne, ces quantifieurs pouvant être branchés en parallèle côté entrée et être raccordés en alternance, côté sortie, par l'intermédiaire d'un premier commutateur (6), situé du côté émission, au moyen d'un dispositif de commande de commutation (8) situé du côté émission, et qui contient un convertisseur de code (9), situé côté émission, qui sert à réduire le nombre des bits pour chaque mot de code et actionne le dispositif de commande de commutation (8), situé côté émission, et qui contient une mémoire tampon (10), située du côté émission, et une mémoire tampon (12), située du côté réception, des mémoires comportant des emplacements de mémoire pour un nombre prédéterminé de mots de code MICD possédant une longueur moyenne, et qui contient un premier convertisseur de code (13) situé du côté réception, qui sert à accroître le nombre de bits pour chaque point d'image et actionne un dispositif de commande de commutation (14), situé du côté réception, et qui contient un codeur MICD (16, 20), branché en aval du convertisseur de code (13) situé du côté réception, et comportant un second convertisseur de code (16) situé du côté réception et servant à convertir les mots de code MICD délivrés par le premier quantificateur (4) en des mots de code MICD possédant une longueur unité, et un troisième convertisseur de code (17) situé du côté réception et servant à convertir les mots de code MICD possédant une longueur fixe inférieure à la moyenne, en des mots de code MICD possédant une longueur unité, les convertisseurs de code étant raccordés en parallèle au niveau de leurs entrées et pouvant être raccordés en alternance, côté sortie, par l'intermédiaire d'un commutateur (18) situé du côté réception, au moyen du dispositif (14) de commande de commutation situé du côté réception, et en outre un décodeur partiel MICD (19, 20), qui est branché en aval du commutateur (18) situé du côté réception et convertit des mots de code MICD possédant la longueur unité en des mots de code MICD possédant la longueur initiale, caractérisé par le fait que le premier quantificateur (4) est agencé de manière à produire des mots de code MICD possédant une longueur variable, que le dispositif de commande de commutation (8), situé du côté émission, est agencé de manière à vérifier, après la formation de chaque mot de code MICD, si, pour les mots de code MICD encore attendus, il existe encore un nombre suffisant d'emplacements de mémoire, dans la mesure où ces mots de code devraient posséder une longueur moyenne, et, dans le cas d'un résultat positif, raccorde le premier quantificateur (4) et, dans le cas d'un résultat négatif, raccorde le second quantificateur (5), et que le dispositif de commande de commutation (14), situé du côté réception, est agencé de telle sorte qu'après un contrôle correspondant effectué du côté émission, il raccorde soit le premier convertisseur de code (16), soit le second convertisseur de code (17).

2. Système de transmission selon la revendication 1, caractérisé par le fait qu'il est prévu un codeur MICD (2', 7') et un décodeur MICD (16', 20') servant à convertir des mots de code appliqués en parallèle, qu'un convertisseur parallèle/série (25) est branché en parallèle avec ce codeur MICD (2' - 7'), et qu'un convertisseur série/parallèle (26) est branché en amont de ce décodeur MICD (16' - 20').

3. Système de transmission suivant la revendication 1, caractérisé par le fait que deux convertisseurs de code (22, 23) situés du côté émission, branchés en parallèle au niveau de leurs entrées et servant à réduire le nombre des lignes parallèles, sont prévus entre le codeur MICD (2' - 7') et le convertisseur parallèle/série (25), et que les sorties des convertisseurs de code (22, 23), situés du côté émission, sont raccordés par l'intermédiaire d'un second commutateur (24), situé du côté émission et commandé par le dispositif de commande de commutation (8'), à l'entrée du convertisseur parallèle/série (25).

# FIG 1

# FIG 2

# FIG 3

# FIG 4

# FIG 5

48 ⊃

c,f

| 45 |
|---|
| 3x |
| 74LS161 |

49 ⊃
50 ⊃

9*

| 46 |
|---|
| 28S42 |

8*

| 47 |
|---|
| 74LS684 |

8,14

48'